# EUROPEAN PATENT SPECIFICATION

(11) **EP 1 659 036 B1**
(45) Date of publication and mention of the grant of the patent: **28.11.2007**
(21) Application number: 05110154.1
(22) Date of filing: 28.10.2005
(51) Int. Cl.: B60R 21/276

(54) **A pyrotechnic gas generator for car safety**
Pyrotechnischer Gasgenerator für Kraftfahrzeugsicherheitsanlage
Générateur de gaz pyrotechnique destinée à la sécurité automobile

(30) Priority: 02.11.2004 FR 0411652
(43) Date of publication of application: 24.05.2006
(73) Proprietor: AUTOLIV DEVELOPMENT AB, 447 83 Vargarda (SE)
(72) Inventor: Costecalde, Laurent, 29000, Quimper (FR); Martin, Bernard, 91610, Ballancourt (FR); Naulleau, Philippe, 29550, Plonevez Porzay (FR)
(74) Representative: Le Faou, Daniel

(56) References cited:
- GB-A- 2 390 665
- US-A- 5 719 351
- US-A1- 2002 145 274

## Description

The present invention relates to a pyrotechnic gas generator for car safety.

The invention relates more particularly to a pyrotechnic gas generator comprising a tubular case closed at its ends and subdivided internally by a partition which defines two contiguous chambers, namely a combustion chamber containing a pyrotechnic charge associated with an ignitor, and a plenum chamber communicating with at least one discharge opening formed through the wall of the plenum chamber, said partition being pierced by at least one nozzle-forming orifice allowing hot gas generated by combustion of said pyrotechnic charge to pass in controlled manner from the combustion chamber into the plenum chamber, which gas can subsequently escape from the plenum chamber via said discharge opening, in particular for the purpose of inflating an airbag for the purpose of protecting the occupants of a motor vehicle in the event of an accident.

More precisely, the present invention seeks to provide an improvement to this type of generator, seeking to fit it with a safety system that is designed to activate in the event of malfunction leading to accidental and unwanted appearance of excessive pressure in the combustion chamber.

The term "excessive pressure" is used in the present description and in the following claims to designate a pressure that is significantly higher than the "nominal" pressure that develops normally therein when the generator is in operation, i.e. while the pyrotechnic charge is burning and the hot gases generated by such combustion are escaping.

Such a problem can arise in particular in the following situations. The heat given off by a vehicle fire can cause the charge (such as a propellant) to burn at pressures that are much higher than the normal operating pressure of the generator. Similarly, in certain kinds of failure of the generator, the outlet orifices can become obstructed, thereby causing the pressure inside the generator to rise well above its normal operating pressure.

In the event of this pressure exceeding the mechanical strength limits of the generator, there is a risk of the generator fragmenting, with shards then being projected that can be dangerous for the occupants of the vehicle or for rescue personnel acting on the vehicle.

Documents FR 2 691 706 and FR 2 796 936 recommend measures seeking to avoid this risk.

For this purpose, the combustion chamber is made up of a cylindrical case having one end folded over, down onto a ring, thereby crimping it.

That highly specific configuration is designed in such a manner that the folded-over portion opens in the event of excess pressure, above some predetermined limit pressure, thereby uncrimping and releasing the ring.

The hot gases are thus expelled directly from the combustion chamber through its end opposite from the end through which the hot gas escapes during normal operation of the generator in order to inflate the airbag.

The expulsion of gas under pressure together with the closure ring therefore does not take place towards the occupant, thereby limiting the risk of injury.

Nevertheless, that solution is not completely satisfactory because of the potential danger of the ring and the hot gas being ejected. That solution requires the effectiveness of the system for retaining the ring and the gas flow to be verified. That system therefore needs to retain sufficient strength to ensure that neither the ring nor the flow of hot gas can be directed towards an occupant of the vehicle or a person who has come to provide help. Furthermore, the environment of the generator needs to be protected to ensure that it is not damaged. That solution therefore does no more than move the problem of gas generator safety to the peripheral components.

A different structure seeking to solve the same problem is disclosed in US patent No. 6 447 008.

That patent relates to a generator whose combustion chamber is defined by a separation wall presenting a nozzle-forming orifice and including a radial stud which serves to secure it to a crimped annular projection projecting inwards from the wall of the case. The stud is suitable for deforming under the force of excessive pressure appearing in the combustion chamber. Under such circumstances, the wall is separated from the case and moves in axial translation therein, in such a manner that the combustion chamber is put into direct communication with the discharge openings. The gas can thus escape directly from the combustion chamber through the discharge openings, without going through the nozzle-forming opening.

That solution is not entirely satisfactory either because the nozzle is a solid component. Consequently, moving it within the body of the generator runs the risk of damaging other components therein. Those other components might the obstruct the gas outlet orifices and lead to excess pressure which, on the contrary, was going to be avoided. Furthermore, it is not always possible to envisage having a nozzle that is movable.

The document GB-A-2 390 665 discloses a hybrid gas generator comprising a pyrotechnic unit adapted to generate hot gas and a chamber containing compressed cold gas. When the pyrotechnic unit is actuated, gas at high temperature is generated and a flow path is opened permitting the hot gas and the cold gas to be mixed and to emerge from the gas generator.

This known generator comprises a gas flow chamber located between the combustion chamber which contains the pyrotechnic material and the chamber which contains the cold gas.

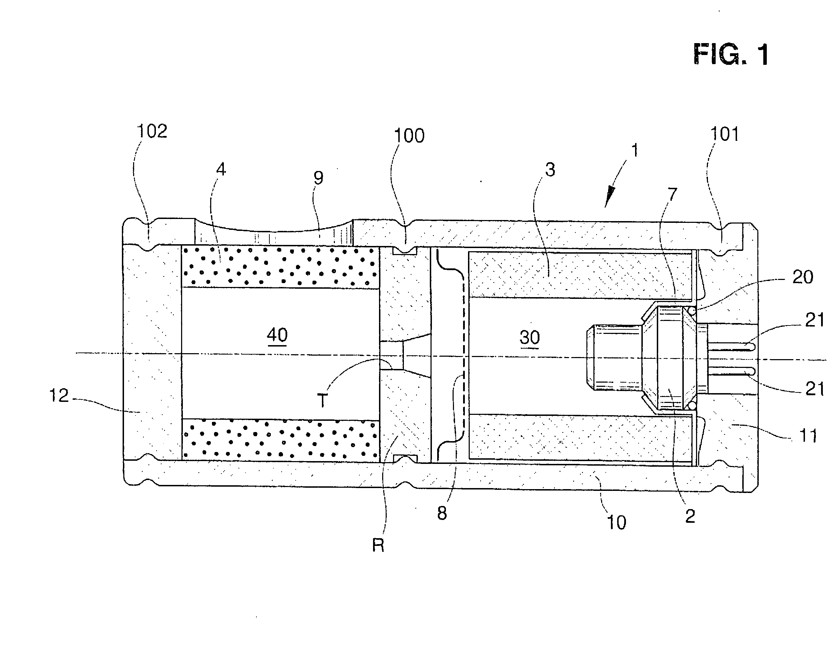

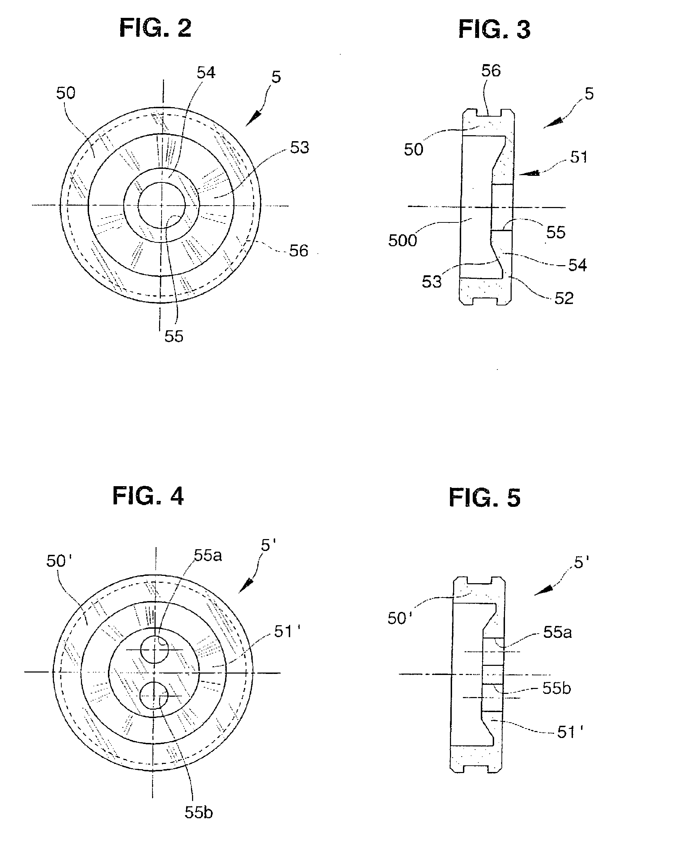

According to a first embodiment shown on figures 1 and 2, the gas flow chamber is provided with a hollow piston element received in a tubular guide. The gas flow chamber communicates with the chamber containing the cold gas via a central aperture which is initially closed by a sealing plug mounted in the tubular stem of said piston and bordered by a membrane. When the pyrotechnic material is ignited, the pressure of the gas generated within the combustion chamber acts on the piston, causing the membrane to rupture and expelling the sealing plug. Thus, the hot gas is injected through the tubular piston stem into the chamber containing the cold gas and is mixed with the latter. Then the mixed gas may flow in the opposite direction through the central aperture and escape from the generator, via outlet parts formed in the wall of said flow chamber. Figure 5 of GB-A-2 390 665 shows a gas generator according to the preamble of claim 1.

This known hybrid generator comprising three different chambers and provided with a slidable piston made of two parts is quite complex and cumbersome.

An object of the present invention is to solve those difficulties.

One of its objectives is to propose a safety system of the kind mentioned above with a minor modification to the partition carrying the nozzle-forming orifice, this modification affecting the structural simplicity and the cost price of the generator little, if at all. Thus, compactness compared with a similar conventional generator having no safety system is not degraded.

Another objective of the invention is to ensure that when the safety system operates, no component parts of the generator, nor any solid debris that might result from fragmentation of any such parts, are projected out from the case, which conserves its initial general shape and integrity.

According to the invention, these objectives are achieved by the fact that said partition comprises a peripheral portion that is of high mechanical strength, whereby it is secured to the wall of the case, and a central portion that receives the nozzle-forming orifice and that is of lower mechanical strength, being suitable for deforming or even breaking under the effect of excessive pressure appearing (unexpectedly) inside the combustion chamber.

In this way, the flow section for hot gas through the partition from the combustion chamber and into the plenum chamber is then considerably increased, while the deformed and/or broken zones of said central portion are pushed back into the inside of said plenum chamber.

Thus it is the increase in the flow section for the gas at excess pressure that leads to a corresponding increase in flow rate, and that ensures that the combustion chamber is decompressed quickly, with the gases that are produced being exhausted via the plenum chamber and through the discharge orifices, as happens during normal triggering of the generator.

Because of the deformation and/or breakage that occurs inside the case, any debris that might be projected remains trapped inside the plenum chamber, without risk of injuring the occupants of the vehicle, nor of obstructing the gas outlet orifices.

According to other characteristics of the invention that are advantageous but not limiting:
- said case is tubular, while said partition consists in a washer having said cylindrical wall crimped thereon;
- said partition in the form of a washer possesses an outer annular portion of constant thickness, having the wall of the case crimped thereon, and a substantially disk-shaped central portion of considerably smaller thickness;
- within the washer, said central portion of smaller thickness defines a setback that is open towards the plenum chamber;
- said central portion of the washer is also of constant thickness;
- said central portion of the washer is connected to the thicker outer annular portion via a peripheral zone that is thin and frangible, forming a circumferential line of weakness;
- said central portion of the washer is connected to the thicker outer annular portion via a peripheral zone that is thicker than its central zone, the thickness of said central portion decreasing progressively from its periphery towards its center;
- said partition has a single central orifice passing therethrough; and
- said partition has a plurality of orifices passing therethrough.

In a possible embodiment of the invention, of design that is particularly simple and compact, the generator comprises a tubular case closed at each of its ends by a respective closure ring, and subdivided internally by a partition which defines at least two contiguous chambers, namely firstly at least one combustion chamber containing a pyrotechnic charge associated with an ignitor, the ignitor being fixed to a central portion of one of the closure rings, and secondly at least one plenum chamber in which a porous cylindrical condenser is engaged, the plenum chamber communicating through the wall of the condenser with at least one discharge opening formed radially through the cylindrical wall of the plenum chamber, said partition having at least one nozzle-forming orifice passing therethrough, allowing hot gas generated by combustion of said pyrotechnic charge to pass in controlled manner from the combustion chamber into the space inside the condenser situated in the plenum chamber, said gas then being capable of escaping from the plenum chamber through the wall of the condenser and through said discharge opening, in particular to inflate an airbag.

It is characterized by the facts that said partition consists in a washer possessing an outer annular portion of constant thickness and high mechanical strength, and a substantially disk-shaped central portion of thickness that is considerably smaller and of lower mechanical strength, receiving the nozzle-forming orifice, said washer being secured inside the tubular case by crimping the cylindrical wall of the case into a peripheral annular groove formed in the outer wall of said outer annular portion, and that said central portion is suitable for deforming, or even breaking, under the effect of excessive pressure appearing inside the combustion chamber so that the flow section for hot gas through the partition from the combustion chamber to the plenum chamber is then considerably increased, while the deformed and/or broken zones of said central portion are pushed back into the plenum chamber inside said cylindrical condenser.

Other characteristics and advantages of the invention appear on reading the following description of a preferred embodiment of the invention. The description is given with reference to the accompanying drawings, in which:
- Figure 1 is a diagrammatic axial section view of a conventional pyrotechnic gas generator forming part of the prior art;
- Figures 2 and 3 are respectively a face view and an axial section view of a first embodiment of a washer-shaped partition that can be integrated in a generator in accordance with the invention;
- Figures 4 and 5 are views similar to Figures 2 and 3 respectively, showing a variant of the partition;
- Figure 6 is a diagrammatic axial section view of a pyrotechnic gas generator in accordance with the invention, provided with the partition shown in Figures 2 and 3, the generator being shown during normal operation;
- Figure 7 is similar to Figure 6, showing the generator after its safety system has been triggered;
- Figure 8 is a view analogous to Figure 3 on a larger scale;
- Figures 9 and 10 are respectively a face view and an axial section view of a second embodiment of a washer-shaped partition suitable for being integrated in a generator in accordance with the invention;
- Figures 11A and 11B are respectively a face view and an axial section view of a third embodiment of a washer-shaped partition suitable for being integrated in a generator in accordance with the invention;
- Figures 12 and 13 are views similar to Figures 9 and 10 respectively, showing a variant of the partition;
- Figures 14 and 15 are diagrams corresponding to the views of Figures 9 and 10 respectively;
- Figures 14A, 14B, 14C, and 14D for the one part and Figures 15A, 15B, 15C, and 15D for the other part are two series of diagrams corresponding to Figures 14 and 15 respectively and showing different stages in the deformation and rupture of the partition during implementation of the safety process when using the second embodiment of the washer-shaped partition;
- Figure 16 is a graph showing variation in the gas flow section out from the combustion chamber as a function of the pressure that exists in the chamber during the process;
- Figure 17 is a graph plotting a curve showing variation in the pressure that exists inside the combustion chamber as a function of time, with and without the safety system being implemented;
- Figure 18 is a diagram for illustrating various modes of operation of the generator, either under normal conditions, or under abnormal conditions of accidental excess pressure, with and without the safety system being implemented; and
- Figures 19 to 22 are theoretical diagrams showing variants of a generator in accordance with the invention having a plurality of combustion and/or plenum chambers.

The pyrotechnic gas generator shown in Figure 1 comprises a tubular case 1 of cylindrical shape whose wall 10 is crimped at each of its ends on respective generally disk-shaped rings 11 and 12.

References 101 and 102 designate annular beads that project inwards and serve to block the wall 10 against the rings 11 and 12 respectively.

In similar manner, the wall 10 is crimped in the central portion of the case onto a disk-shaped transverse partition referenced R.

The annular crimping bead 100 penetrates into a receiving peripheral groove provided for this purpose in the partition R.

In another embodiment (not shown), the partition R can be held by two crimps formed respectively above and below the partition R.

In its central portion, the partition R is pierced by a nozzle-forming orifice T which, for example, is in the form of a cylinder adjacent to a slightly conical portion.

The partition R is of constant thickness.

The case 1, the rings 12 and 11, and the partition R are traditionally made of a metal that is strong and that withstands high temperatures; nevertheless, the case 1 is made of a metal that possesses sufficient ductility for crimping to be possible.

The middle partition R subdivides the inside of the case 1 into at least two chambers, at least one of which is a "combustion" chamber 30, and at least another one of which is a "plenum" chamber 40.

The generator includes an ignitor 2 that is associated with a pyrotechnic charge 3, the ignitor 2 and the charge 3 both being situated in the combustion chamber 30.

As can be seen in Figure 1, the charge 3 is generally in the form of an annular sleeve of generally cylindrical shape that is engaged inside the wall 10 of the case.

The ignitor 2 is mounted in the central portion of the ring 11 and it is held and centered against the inside face of said ring by means of a suitable mounting member 7.

An annular gasket 20 provides sealing at this level.

The major portion of the ignitor 2 penetrates into the inside space of the charge 3.

The charge is held in place inside the combustion chamber 30 by suitable centering means (not shown), and it is held in translation by a cup-shaped grid 8 that is interposed between the charge 3 and the partition R.

The ignitor 2 is provided with a pair of pins 21 designed to enable it to be connected to a source of electricity.

This ignitor, of known type, is an electropyrotechnic initiator. It comprises an electric initiation system and a fragmentable cap containing a pyrotechnic composition.

In operation, this pyrotechnic composition releases a flame and hot gas which, in turn, leads to combustion of the charge 3.

The charge is constituted by solid propellant, for example, and is suitable for generating a large quantity of gas, very quickly.

The conical portion of the nozzle orifice T faces towards the combustion chamber 30. Nevertheless, it is possible to envisage using some other shape, for example a cylindrical nozzle.

Inside the plenum chamber 40, there is mounted a sleeve 4 of gas-permeable filter material.

Its function is to capture certain particles present in the gas generated by combustion of the charge 3 so as to prevent these particles from leaving the case and penetrating into the airbag.

Facing the chamber 40 and the condenser 4, the wall 10 of the case is pierced by at least one radial hole 9, and preferably by a plurality of radial holes 9 that are regularly spaced apart angularly.

In the event of the vehicle suffering impact, a deceleration sensor produces an electric signal which is transformed by the ignitor 2 into a pyrotechnic signal causing the propellant charge 3 to burn. The propellant generates gas in the combustion chamber 30 and exhaust of the gas is controlled by the orifice of the nozzle T.

This exhaust takes place via the plenum chamber 40 through the filter wall of the condenser 4 towards the discharge holes 9, leading to the inside of the airbag.

The drawback of that prior art device is associated with the fact that in the event of excessive pressure being generated accidentally inside the chamber 30, the compressed gas cannot escape appropriately through the orifice of the calibrated nozzle T, and that runs the risk of damaging the case 1 and/or ejecting the ring 11, or of undoing the crimping of certain elements, with a risk of mechanical parts being projected that might injure the occupants of the vehicle or emergency personnel.

Figures 2 and 3 show a partition 5 suitable for replacing the partition R described above, in order to solve this problem.

As can be seen in Figures 2 and 3, the partition 5 consists of a washer possessing an outer annular portion 50 of constant thickness and a substantially dish-shaped central portion 51 of thickness that is considerably smaller than the thickness of the portion 50.

In the middle of the central portion 51 there is pierced a circular orifice 55 that acts as a nozzle. In this zone, the thickness of the central portion is greater (although still much smaller than that of the outer portion 50); this zone is connected via a portion 53 that is conical or approximately conical to the outer portion 50, the connection between these two zones being provided via a peripheral zone 52 that is thin and frangible, forming a circumferential line of weakness.

The thicker, central part of the portion 51 is referenced 54.

The central portion 51 is not placed in the midplane of symmetry of the washer, but is offset towards one of its faces (to the right looking at Figure 3) so that the portion 51 defines a setback 500.

As explained below, the setback 500 should preferably face the plenum chamber when the washer is mounted inside the case of the generator.

Reference 56 designates the annular groove used for crimping the case onto the washer.

The variant shown in Figures 4 and 5 has a washer 5' with the same general configuration as that described above, including an outer portion 50' of thickness that is significantly greater than that of the inner portion 51'.

This partition nevertheless differs from the above partition in that it has two nozzle-forming orifices referenced 55a and 55b. In the embodiment shown in Figures 4 and 5, these orifices are disposed symmetrically on either side of the axis of the washer.

In the example shown, the diameters of these two orifices are identical. Nevertheless, they could be different.

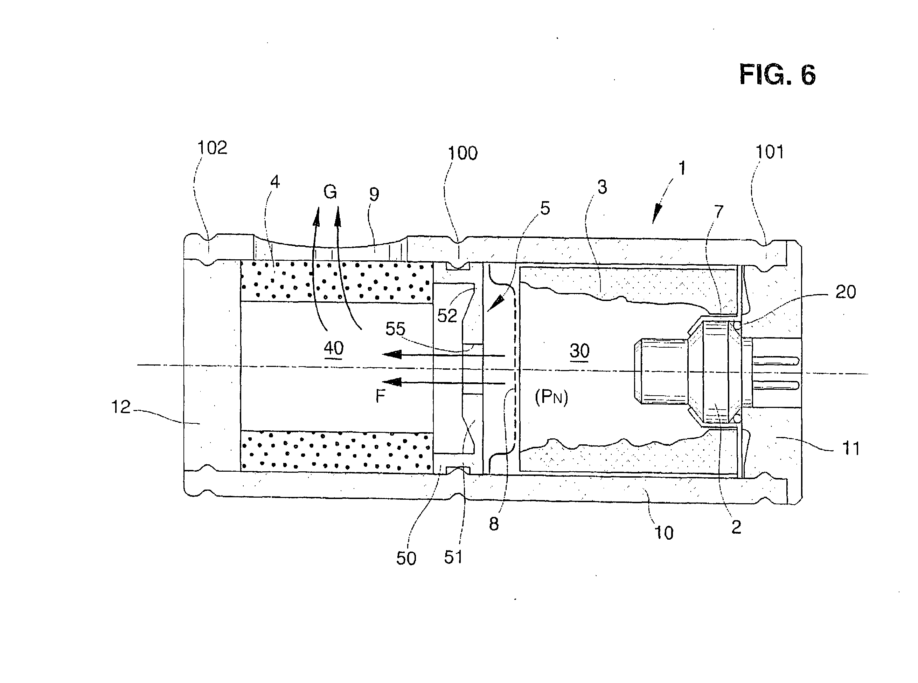

During normal operation of the generator, the burning charge 3 generates gas at a flow rate and pressure P_{N} that are controlled by the orifice 55 in the partition 5 as the gas passes through the orifice 55, as represented by arrows F in Figure 6.

Thereafter, the gas escapes from the plenum chamber 40 after passing through the porous wall of the condenser 4, escaping via the discharge opening(s) 9 as symbolized by arrows G.

The strength of the washer 5, and more particularly the strength of its zone of weakness 52 is selected so that the partition 5 does not deform under the action of this nominal pressure P_{N}.

Consequently, the generator operates in conventional manner like a traditional generator, such as that shown in Figure 1.

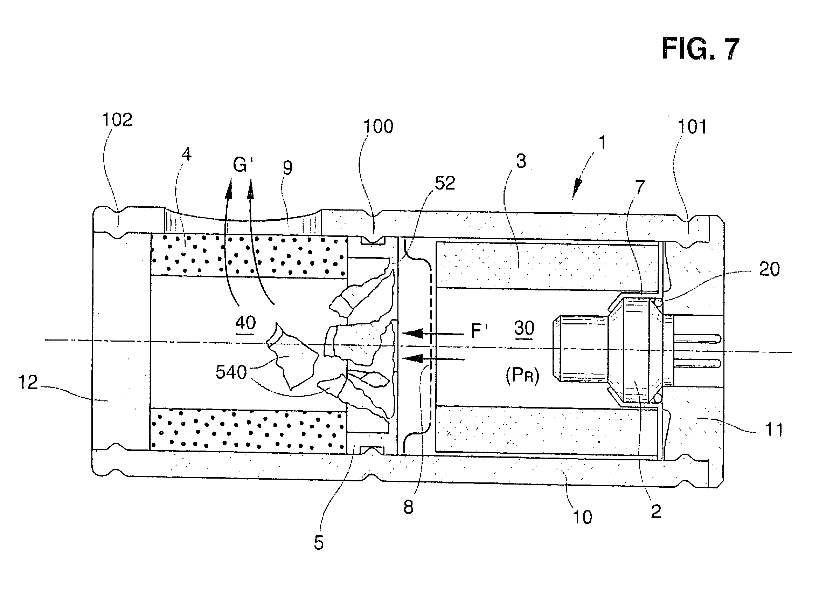

With reference to Figure 7, there follows an explanation of how the generator operates in the event of excessive pressure P_{R} appearing inside the combustion chamber 30.

Under such circumstances, the flow section of the orifice 55 is too small to pass enough of the gas that is given off to allow the pressure to return to a suitable value inside the chamber 30.

A high level of thrust is exerted on the central portion 51 of the washer-shaped partition 5. These high pressure causes the central zone to break in the zone of weakness 52; the debris produced by this breakage, in the form of petals of irregular shape 540, is projected into the inside of the plenum chamber 40, and more precisely into the inside of the tubular condenser 4.

Thus, the gas flow section is suddenly very considerably increased; the gas therefore escapes through this large-diameter passage as represented by arrows F' and subsequently leaves the case via the discharge holes 9, as represented by the arrows G', thereby inflating the airbag.

Rupture of the central portion of the internal partition thus has the effect of depressurizing the combustion chamber sufficiently to ensure that the integrity of the generator is conserved.

The case 1 conserves its general shape; no parts of any kind are projected out from the generator.

The only debris produced by breakage is captured and trapped inside the condenser 4.

With the above-described partition 5, the change in section takes place quite suddenly, corresponding to an almost instantaneous breakage of the zone of weakness of the washer.

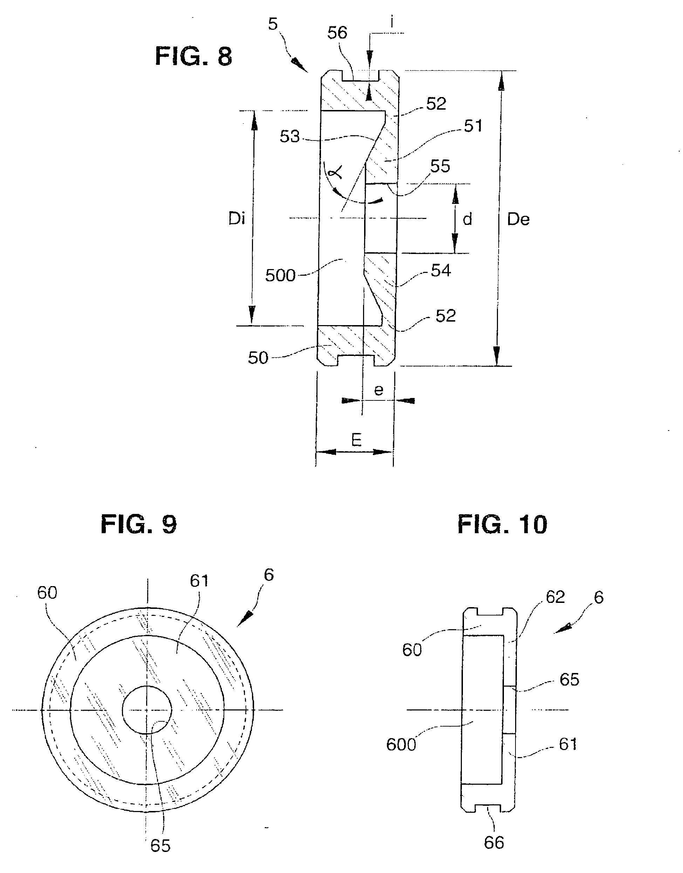

With a partition of the kind shown in Figures 9 and 10, the behavior that is observed is different.

This partition consists in a washer 6 having substantially the same configuration as the washer 5 described above.

It has an outer portion 60 and a central portion 51 of thickness that is considerably smaller than that of the outer portion 60, the portion 61 defining a setback 600 comparable with the setback 500 referred to above for the first embodiment.

This washer 6 differs from the washer 5 essentially by the fact that the central portion 61 is also constant in thickness.

The reference 62 designates the peripheral zone of the portion 61, whereby it is connected to the outer portion 60.

This portion 61 is pierced by a central hole 65 that acts as a nozzle.

The groove for crimping the washer inside the case is referenced 66. Other types of crimping could optionally also be envisaged. Thus, the washer can be held by two regions of crimping one above and the other below the washer.

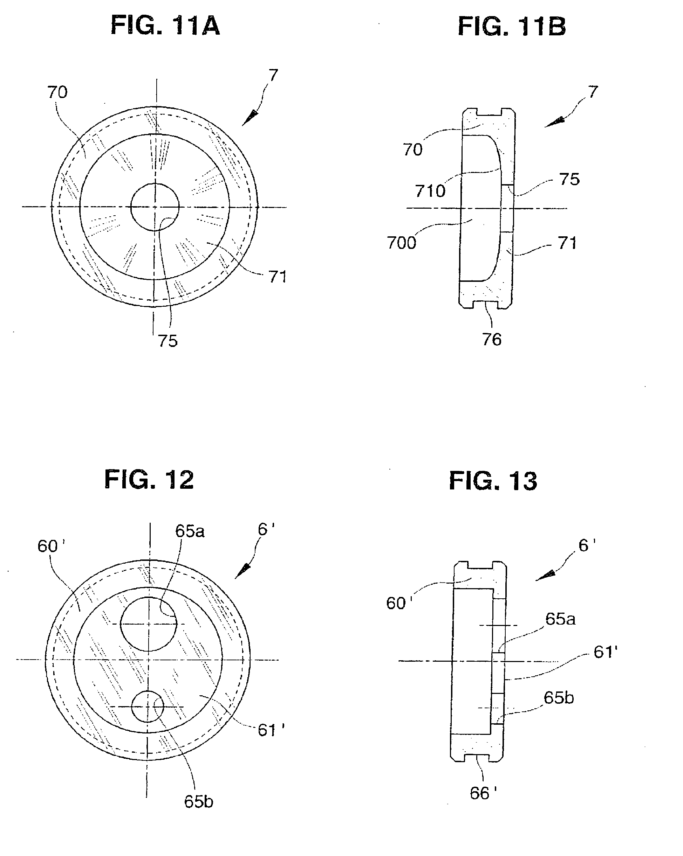

The variant shown in Figures 12 and 13 differs from the above variant by the fact that it does not have one orifice but two, referenced 65a and 65b; this variant is referenced 6' and its outer and central portions are referenced 60' and 61' respectively, whereas its outer groove is referenced 66'.

In the example shown, one of the orifices, specifically the orifice 65a, possesses a diameter that is greater than the other (65b).

This disposition is not essential, and both orifices could have the same diameter.

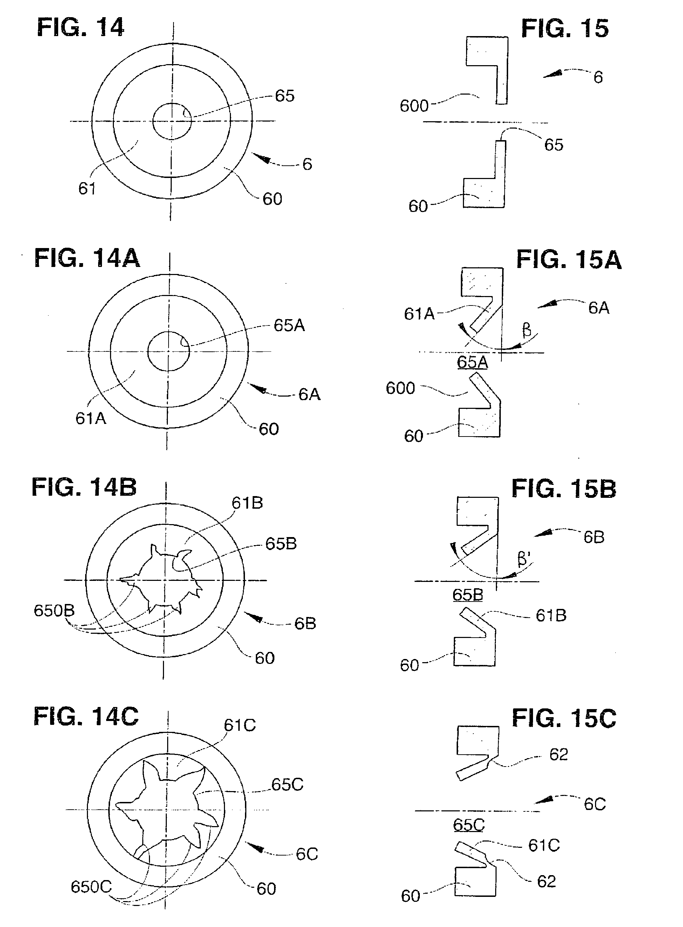

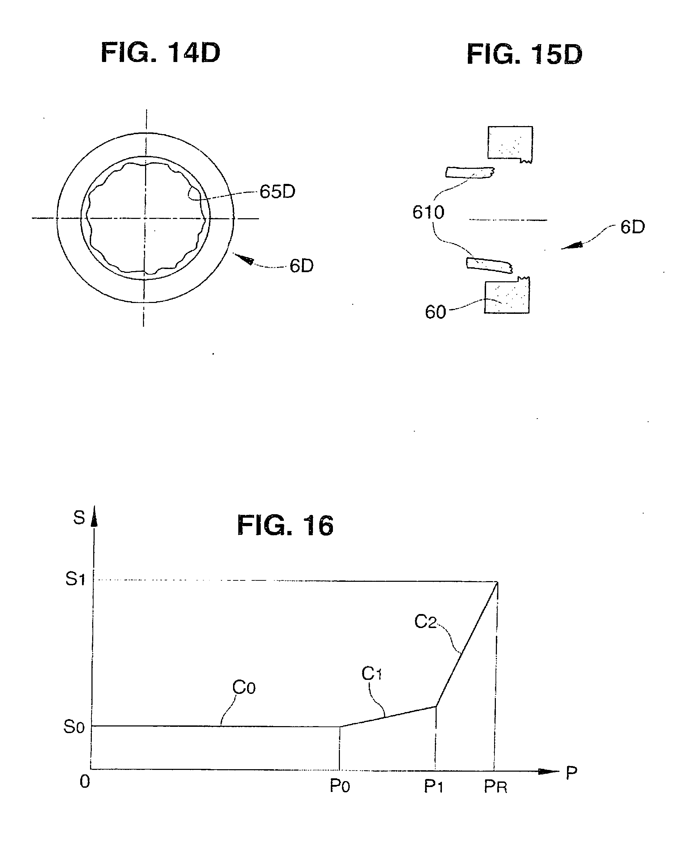

From Figures 14 & 15 and 14B-15D, it can be understood how the deformation and breakage of the central portion of the washer 6 occurs in the event of excess pressure.

The increase in the pressure differential to which the washer is subjected begins initially by deforming the portion 61 conically, this being referenced 61A in Figures 14A and 15A.

The angular deflection of this portion 61A relative to a transverse plane is reference β in Figure 15A.

Figures 14B and 15B show a subsequent stage which corresponds to an increase in this angle, now referenced β', and to small cracks 650B forming in the periphery of the orifice 65.

Naturally, the opening defined by this orifice, referenced 65A and 65B in Figures 14A and 15A and in Figures 14B and 15B, is of a section that increases progressively as deformation increases.

Figures 14C and 15C show a still further advanced stage with an opening 65C of even greater section, and with the cracks 650C propagating to the peripheral portion 60.

Finally, in the stage shown in Figures 14D and 15D, the material shears where the petals separated by the cracks join the ring, and the petals come off; the debris expelled into the inside of the plenum chamber is referenced 610 in Figure 15D.

In Figure 16, the rectilinear portion C₀ of the curve corresponds to the initial state shown in Figures 14 and 15 during which the deformation of the portion 61 has not yet begun; the rectilinear portion C₁ of the curve corresponds to conical deformation of the portion 61 without any cracks appearing, i.e. at a stage corresponding to that shown in Figures 14A and 15A.

Finally, rectilinear portion C₂ corresponds to cracks forming and propagating until rupture occurs at pressure P_{R}.

The washer-shaped partition shown in Figures 11A and 11B is similar to that of Figures 9 and 10, except that its central portion 71 is not of constant thickness.

Its thickness increases progressively, e.g. continuously, from the nozzle-forming central orifice 75 to the outer peripheral portion 70 of great width.

The face 710 of the portion 71 on the inside of the setback 700 is conical, or slightly curved, e.g. concave.

In this embodiment, the deformation and the increase in gas flow section take place more progressively than in the above embodiment, with the formation of cracks tending to be delayed because of the increase in thickness of material going from the center towards the periphery.

Reference 76 designates the groove formed in the outer portion 70 onto which the case is crimped.

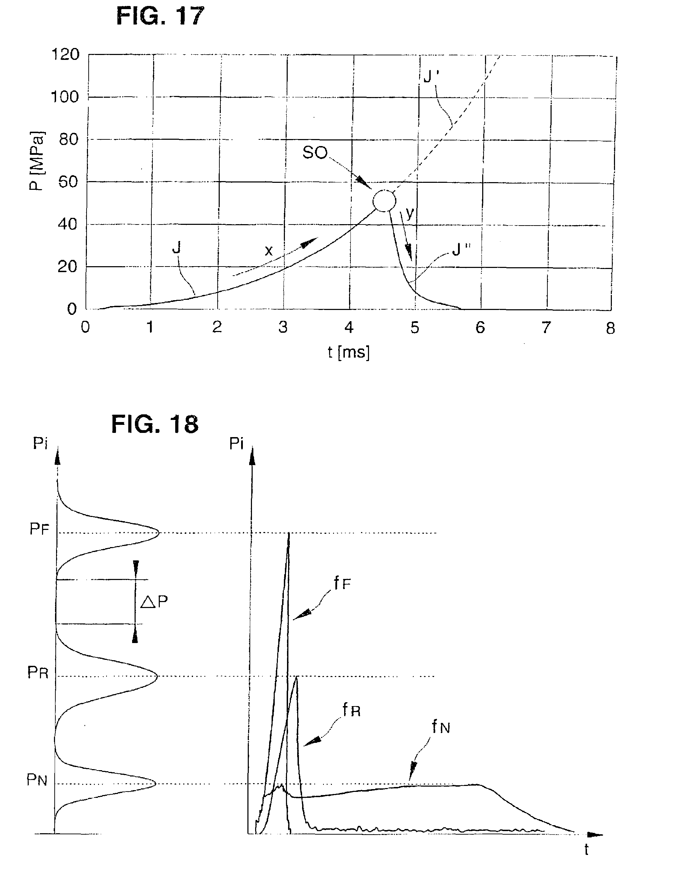

In the curve of Figure 17, the abscissa axis is a time axis and is graduated in milliseconds (ms), while the ordinate axis is a pressure axis is graduated in megapascals (MPa).

Curve J represents the appearance of pressure P inside the combustion chamber. This curve begins by a portion J which is followed in the direction of arrow x.

When the generator is not fitted with a safety system in accordance with the invention, the curve J is naturally extended by the curve portion J' drawn in dashed lines.

It can be seen that pressure increases very considerably and very quickly and can reach a value of about 100 MPa after about 6 ms.

Such pressure leads inevitably to the generator bursting.

The point SO on the curve shows a safety event occurring as caused by means of the invention, and corresponding to the central portion of the washer deforming and/or breaking.

On reaching the point SO (opening threshold), it can be seen that pressure drops off quickly corresponding to curve portion J" which is followed in the direction of arrow y until the pressure drops back to zero.

The pressure inside the generator is thus restricted to a value of the order of 40 MPa to 60 MPa, and this can be withstood by the structure of the generator.

In the diagram of Figure 18, the indices N, R, and F correspond respectively to the terms "nominal", "rupture", and "fragmentation".

The right-hand portion of the diagram showing three curves corresponding to variant of the internal pressure Pᵢ inside the combustion chamber as a function of time t.

The curve f_{N} corresponds to normal operation of the pyrotechnic generator for a nominal pressure P_{N} and in the absence of any malfunction of the generator.

It can be seen that the pressure remains substantially constant, reaching a maximum of P_{N} over a relatively long period of time, which corresponds to the airbag being inflated.

As an indication, the time required for inflation generally lies in the range 30 ms to 50 ms approximately for a front airbag.

The curve f_{R} corresponds to a situation in which pressure becomes excessive and abnormal, for a generator that is fitted with a safety system in accordance with the invention.

It can be seen that the pressure P_{R} is capped to some particular value, which is selected to allow the central portion of the washer-shaped partition to deform and/or break, but without running the risk of the generator exploding.

The curve f_{F} shows the situation in which excessive and accidental pressure appears in the combustion chamber, rising to a value P_{F} that is very high, because the generator is not fitted with a system in accordance with the invention.

In the absence of any safety device, the pressure increases until the generator explodes or bursts.

On the left-hand portion of the figure, the gap ΔP corresponds to the safety margin that needs to be provided between the extra pressure level P_{R} that can be accommodated by the safety system, and the extra pressure P_{F} that runs the risk of the generator bursting and being damaged.

The values in question can be determined by acting on the thickness and the shape of the deformable and/or frangible central portion, and also on the diameter of the orifice, or orifices, of the nozzle(s) formed in the central portion, and also on the number of such orifices.

Although provision is made in the embodiment described above for only one or two nozzle orifices, it goes without saying that some other number of orifices could be provided depending on the application.

By way of example, and with reference to Figure 8, the following dimensions are suitable for the washer-shaped partition 5:
- outside diameter Dₑ: 28 mm;
- inside diameter Dᵢ of the portion 50: 20 mm;
- thickness E of the annular portion 50: 6.5 mm;
- thickness e of the central portion 54: 3 mm;
- diameter d of the orifice of nozzle 55: about 7 mm;
- the depth i of the groove 56: 1 mm;
- the angle α of the conical face of the portion 53 relative to the plane of the washer: 40°; and
- the minimum thickness of the washer in its zone of weakness 52: about 1 mm.

The washer-shaped partition 5, 6, or 7 is advantageously made as a single piece.

The present invention is also applicable to a pyrotechnic gas generator having more than one pyrotechnic charge, and in particular two different pyrotechnic charges.

Thus, for example, it can be applied to a generator of the general type described in document EP 0 864 470, to which reference can be made where necessary.

In such a device, the plenum chamber is located in the central portion of the case and it is separated from two combustion chambers by a pair of transverse partitions situated at its ends, each combustion chamber receiving a corresponding pyrotechnic charge and ignitor.

Each of the two combustion chambers communicates with the plenum chamber via a partition that includes a nozzle-forming orifice.

In a structure of that kind, one and/or both of the partitions can advantageously be replaced by a washer-shaped partition of the kind described above so as to avoid excessive pressure appearing accidentally in one and or the other of the two combustion chambers.

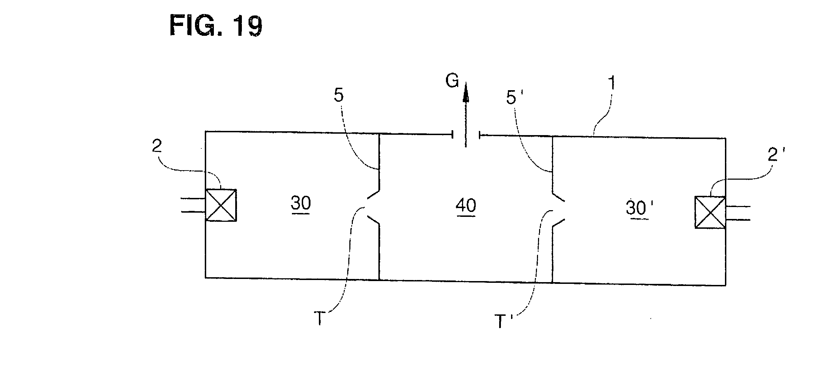

The diagram of Figure 19 shows a generator of this type having a case that is referenced 1.

Each of the two combustion chambers 30, 30' is associated with a respective ignitor 2, 2'; partitions 5, 5' separate them from the middle (common) plenum chamber 40 via respective nozzles T and T' passing through the partitions. The arrow G represents hot gas escaping from the chamber 40.

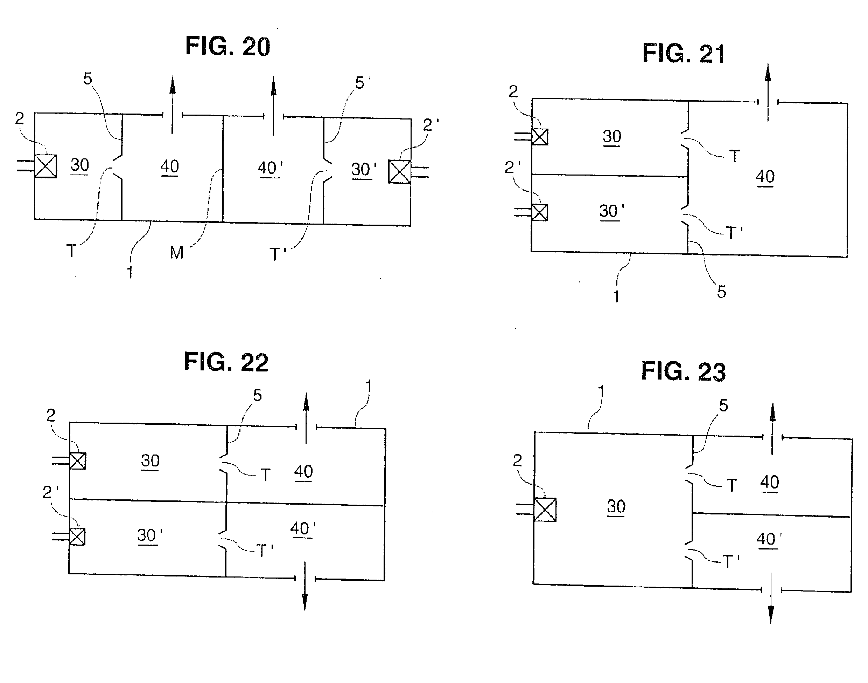

Figure 20 shows a variant having two generators of the kind shown in Figure 6 that are mounted head-to-head on the same axis, being separated by a mid-wall M. Each generator possesses its own ignitor 2, 2', its own combustion chamber 30, 30', and its own plenum chamber 40, 40'. The chambers can operate independently of each other.

In Figure 21, two combustion chambers 30 and 30' are provided each associated with a respective ignitor 2 or 2'. These two chambers are contiguous, being separated by a partition 5 from a single plenum chamber 40. The partition 5 possesses two nozzles T and T' respectively which provides communication between the chamber 40 and each of the chambers 30 and 30', respectively.

In Figure 22, there are two combustion chambers 30 and 30' each associated with a respective ignitor 2 or 2' and disposed side by side. These two chambers are contiguous and they are separated by a partition 5 from a pair of plenum chambers 40, 40'. The partition 5 possesses two nozzles T and T' providing communication between each of the chambers 30 and 30' with the corresponding one of the chambers 40 or 40'.

In Figure 23, there is a single combustion chamber 30 associated with an ignitor 2. It is separated by a partition 5 from a pair of plenum chambers 40, 40'. The partition 5 possesses two nozzles T and T' providing communication between the chamber 30 and each of the two chambers 40 and 40', respectively.

In the variants of Figures 19 to 23 as described briefly above, the various combustion and/or plenum chambers need not necessarily have the same shape or the same capacity, with their shapes and capacities being adapted to the specific applications for which the generator is intended.

## Claims

1. A pyrotechnic gas generator for car safety, the generator comprising a tubular case (1) closed at its ends and subdivided internally by a partition which defines two contiguous chambers, namely a combustion chamber (30) containing a pyrotechnic charge (3) associated with an ignitor (2), and a plenum chamber (40) communicating with at least one discharge opening (9) formed through the wall (10) of plenum chamber (40), said partition being pierced by at least one nozzle-forming orifice allowing hot gas generated by combustion of said pyrotechnic charge (3) to pass in controlled manner from the combustion chamber (30) into the plenum chamber (40), which gas can subsequently escape from the plenum chamber (40) via said discharge opening (9), in particular for the purpose of inflating an airbag, the generator being **characterized by** the fact that said partition (5; 6; 7) comprises a peripheral portion (50; 60; 70) that is of high mechanical strength, whereby it is secured to the wall (10) of the case (1), and a central portion (51; 61; 71) that receives the nozzle-forming orifice (55; 65; 75) and that is of lower mechanical strength, being suitable for deforming or even breaking under the effect of excessive pressure appearing inside the combustion chamber (30).

2. A generator according to claim 1, **characterized by** the fact that said tubular case (1) possesses a cylindrical wall (10), and said partition (5; 6; 7) consists in a washer held to the wall (10) of the case by crimping.

3. A generator according to claim 2, **characterized by** the fact that said partition (5; 6; 7) in the form of a washer possesses an outer annular portion (50; 60; 70) of constant thickness, having the wall (10) of the case crimped thereon, and a substantially disk-shaped central portion (51; 61; 71) of considerably smaller thickness.

4. A generator according to claim 3, **characterized by** the fact that, within the washer, said central portion (51; 61; 71) of smaller thickness defines a setback (500; 600; 700) that is open towards the plenum chamber (40).

5. A generator according to claim 3 or claim 4, **characterized by** the fact that said central portion (61) of the washer (6) is also of constant thickness.

6. A generator according to claim 3 or claim 4, **characterized by** the fact that said central portion (51) of the washer (5) is connected to the thicker outer annular portion (50) via a peripheral zone that is thin and frangible, forming a circumferential line of weakness.

7. A generator according to claim 3 or claim 4, **characterized by** the fact that said central portion (71) of the washer (7) is connected to the thicker outer annular portion (70) via a peripheral zone that is thicker than its central zone, the thickness of said central portion (71) decreasing progressively from its periphery towards its center.

8. A generator according to any one of claims 1 to 7, **characterized by** the fact that said partition (5; 6; 7) has a single central orifice passing therethrough.

9. A generator according to any one of claims 1 to 7, **characterized by** the fact that said partition (5'; 6') has a plurality of orifices (55a, 55b; 65a, 65b) passing therethrough.

10. A pyrotechnic gas generator for car safety, the generator comprising a tubular case (1) closed at each of its ends by a respective closure ring (11, 12), and subdivided internally by a partition which defines at least two contiguous chambers, namely firstly at least one combustion chamber (30) containing a pyrotechnic charge (3) associated with an ignitor (2), the ignitor being fixed to a central portion of one of the closure rings, and secondly at least one plenum chamber (40) in which a porous cylindrical condenser (4) is engaged, the plenum chamber communicating through the wall of the condenser (4) with at least one discharge opening (9) formed radially through the cylindrical wall (10) of the plenum chamber (40), said partition having at least one nozzle-forming orifice passing therethrough, allowing hot gas generated by combustion of said pyrotechnic charge (3) to pass in controlled manner from the combustion chamber (30) into the space inside the condenser (4) situated in the plenum chamber (40), said gas then being capable of escaping from the plenum chamber (40) through the wall of the condenser (4) and through said discharge opening (9), in particular to inflate an airbag, the generator being **characterized by** the facts that said partition consists in a washer (5; 6; 7) possessing an outer annular portion (50; 60; 70) of constant thickness and high mechanical strength, and a substantially disk-shaped central portion (51; 61; 71) of thickness that is considerably smaller and of lower mechanical strength, receiving the nozzle-forming orifice (55; 65; 74), said washer (5; 6; 7) being secured inside the tubular case by crimping the cylindrical wall (10) of the case into a peripheral annular groove (56; 66; 76) formed in the outer wall of said outer annular portion (50; 60; 70), and that said central portion (51; 61; 71) is suitable for deforming, or even breaking, under the effect of excessive pressure appearing inside the combustion chamber (30) so that the flow section for hot gas through the partition (5; 6; 7) from the combustion chamber (30) to the plenum chamber (40) is then considerably increased, while the deformed and/or broken zones (61B; 540, 610) of said central portion (51; 61; 71) are pushed back into the plenum chamber (40) inside said cylindrical condenser (4).

## Patentansprüche

1. Pyrotechnischer Gasgenerator für Kraftfahrzeugsicherheitsanlagen, wobei der Generator umfaßt:
ein rohrförmiges Gehäuse (1), das an seinen Enden geschlossen und im Inneren unterteilt ist über eine Trennung, die zwei benachbarte Kammern definiert, nämlich einen Brennraum (30), der eine pyrotechnische Ladung (3) in Verbindung mit einem Zünder (2) beinhaltet, sowie eine Ansaugkammer (40), die mit wenigstens einer Auslaßöffnung (9) kommuniziert, die durch die Wand (10) der Ansaugkammer (40) ausgebildet ist, wobei die Trennung durchstoßen ist durch wenigstens eine düsenförmige Öffnung, welche es durch die Verbrennung der pyrotechnischen Ladung (3) erzeugtem, heißen Gas erlaubt, in gesteuerter Weise von dem Brennraum (30) in die Ansaugkammer (40) zu gelangen, wobei das Gas darauffolgend aus der Ansaugkammer (40) über die Auslaßöffnung (9) entweichen kann, und zwar insbesondere zum Zweck des Aufblasens eines Airbags, wobei der Generator **gekennzeichnet ist durch** die Tatsache, daß die Trennung (5; 6; 7) einen umfänglichen Abschnitt (50; 60; 70) umfaßt, der von hoher mechanischer Festigkeit ist, wobei er an der Wand (10) des Gehäuses (1) befestigt ist, und einen zentralen Abschnitt (51; 61; 71), der die düsenförmige Öffnung (55; 65; 75) aufnimmt und von geringerer mechanischer Festigkeit ist und geeignet ist, sich zu deformieren oder sogar zu brechen unter dem Einfluß übermäßigen Drucks, der im Inneren des Brennraums (30) auftritt.

2. Generator nach Anspruch 1, **gekennzeichnet durch** die Tatsache, daß das rohrförmige Gehäuse (1) eine zylindrische Wand (10) besitzt und die Trennung (5; 6; 7) aus einer Dichtung besteht, die an der Wand (10) des Gehäuses **durch** Crimpen gehalten wird.

3. Generator nach Anspruch 2, **gekennzeichnet durch** die Tatsache, daß die Trennung (5; 6; 7) in Form einer Dichtung einen äußeren ringförmigen Abschnitt (50; 60; 70) konstanter Dicke besitzt, an den die Wand (10) des Gehäuses gecrimpt ist, sowie einen im wesentlichen scheibenförmigen, zentralen Abschnitt (51; 61; 71) wesentlich kleinerer Dicke.

4. Generator nach Anspruch 3, **gekennzeichnet durch** die Tatsache, daß innerhalb der Dichtung der zentrale Abschnitt (51; 61; 71) geringerer Dicke einen Rückversatz (500; 600; 700) definiert, der in Richtung der Ansaugkammer (40) offen ist.

5. Generator nach Anspruch 3 oder Anspruch 4, **gekennzeichnet durch** die Tatsache, daß der zentrale Abschnitt (61) der Dichtung (6) ebenfalls von konstanter Dicke ist.

6. Generator nach Anspruch 3 oder Anspruch 4, **gekennzeichnet durch** die Tatsache, daß der zentrale Abschnitt (51) der Dichtung (5) mit dem dickeren äußeren ringförmigen Abschnitt (50) über eine umfängliche Zone verbunden ist, die dünn und zerbrechlich ist und eine umfängliche Schwächungslinie ausbildet.

7. Generator nach Anspruch 3 oder Anspruch 4, **gekennzeichnet durch** die Tatsache, daß der zentrale Abschnitt (71) der Dichtung (7) mit dem dickeren äußeren ringförmigen Abschnitt (70) über eine umfängliche Zone verbunden ist, die dicker als seine zentrale Zone ist, wobei die Dicke des zentralen Abschnitts (71) von seinem Umfang in Richtung seines Zentrums fortschreitend abnimmt.

8. Generator nach einem der Ansprüche 1 bis 7, **gekennzeichnet durch** die Tatsache, daß die Trennung (5; 6; 7) eine **durch** sie verlaufende einzelne zentrale Öffnung hat.

9. Generator nach einem der Ansprüche 1 bis 7, **gekennzeichnet durch** die Tatsache, daß die Trennung (5; 6) mehrere **durch** sie verlaufende Öffnungen (55a, 55b; 65a, 65b) hat.

10. Pyrotechnischer Gasgenerator für Kraftfahrzeugsicherheitsanlagen, wobei der Generator umfaßt:
ein rohrförmiges Gehäuse (1), das an jedem seiner Enden über einen jeweiligen Verschlußring (11, 12) verschlossen ist und im Inneren unterteilt ist über eine Trennung, die wenigstens zwei benachbarte Kammern definiert, nämlich erstens zumindest einen Brennraum (30), der eine pyrotechnische Ladung (3) in Verbindung mit einem Zünder (2) beinhaltet, wobei der Zünder an einem zentralen Abschnitt eines der Verschlußringe befestigt ist und zweitens wenigstens eine Ansaugkammer (40), in der ein poröser, zylindrischer Kondensator (4) angreift, wobei die Ansaugkammer durch die Wand des Kondensators (4) mit wenigstens einer Auslaßöffnung (9) kommuniziert, die radial durch die zylindrische Wand (10) der Ansaugkammer (40) ausgebildet ist, wobei die Trennung wenigstens eine durch sie verlaufende, düsenförmige Öffnung hat, die es durch die Verbrennung der pyrotechnischen Ladung (3) erzeugtem heißen Gas erlaubt, in gesteuerter Weise von dem Brennraum (30) in den Raum im Inneren des in der Ansaugkammer (40) angeordneten Kondensators (4) zu gelangen, wobei das Gas dann aus der Ansaugkammer (40) entweichen kann durch die Wand des Kondensators (4) und durch die Auslaßöffnung (9), um insbesonders einen Airbag aufzublasen, wobei der Generator **gekennzeichnet ist durch** die Tatsachen, daß die Trennung aus einer Dichtung (5; 6; 7) besteht, die einen äußeren ringförmigen Abschnitt (50; 60; 70) konstanter Dicke und hoher mechanischer Festigkeit besitzt, sowie einem im wesentlichen scheibenförmigen zentralen Abschnitt (51; 61; 71) einer Dicke, die wesentlich kleiner ist und geringere mechanische Festigkeit hat und die düsenförmige Öffnung (55; 65; 75) aufnimmt, wobei die Dichtung (5; 6; 7) im Inneren des rohrförmigen Gehäuses befestigt ist **durch** Crimpen der zylindrischen Wand (10) des Gehäuses in eine umfängliche ringförmige Ausnehmung (56; 66, 76), die in der äußeren Wand des äußeren ringförmigen Abschnitts (50; 60; 70) ausgebildet ist und daß der zentrale Abschnitt (51; 61; 71) geeignet ist, sich zu deformieren oder sogar zu brechen unter dem Einfluß übermäßigen Drucks, der im Inneren des Brennraums (30) auftritt, so daß der Strömungsquerschnitt für heißes Gas von dem Brennraum (30) **durch** die Trennung (5; 6; 7) zu der Ansaugkammer (40) dann beachtlich erhöht ist, während die deformierten und/oder gebrochenen Zonen (61B; 540; 610) des zentralen Abschnitts (51; 61; 71) zurückgeschoben werden in die Ansaugkammer (40) im Inneren des zylindrischen Kondensators (4).

## Revendications

1. Générateur pyrotechnique de gaz destiné à la sécurité automobile, comprenant une enveloppe tubulaire (1) fermée à ses extrémités et subdivisée intérieurement par une cloison qui délimite deux chambres contiguës, à savoir une chambre de combustion (30) contenant une charge pyrotechnique (3) associée à un allumeur (2) et une chambre de tranquillisation (40) communiquant avec au moins une ouverture de décharge (9) ménagée dans la paroi (10) de la chambre de tranquillisation (40), cette cloison étant traversée par au moins un orifice formant tuyère qui autorise un passage contrôlé des gaz chauds générés par la combustion de ladite charge pyrotechnique (3) de la chambre de combustion (30) vers la chambre de tranquillisation (40), ces gaz pouvant ensuite s'échapper de la chambre de tranquillisation (40), via ladite ouverture de décharge (9), notamment pour gonfler un coussin de protection gonflable, **caractérisé par le fait que** ladite cloison (5 ; 6 ; 7) comprend une portion périphérique (50 ; 60 ; 70) à résistance mécanique élevée, par laquelle elle est fixée à la paroi (10) de l'enveloppe (1) et une portion centrale (51 ; 61 ; 71) recevant l'orifice formant tuyère (55 ; 65 ; 75), de moindre résistance mécanique, susceptible de se déformer, voire de se rompre, sous l'effet d'une surpression excessive apparaissant à l'intérieur de la chambre de combustion (30).

2. Générateur selon la revendication 1, **caractérisé par le fait que** ladite enveloppe tubulaire (1) possède une paroi cylindrique (10) et que ladite cloison (5 ; 6 ; 7) consiste en une rondelle maintenue par sertissage sur la paroi (10) de l'enveloppe.

3. Générateur selon la revendication 2, **caractérisé par le fait que** ladite cloison (5 ; 6 ; 7) en forme de rondelle possède une portion annulaire extérieure (50 ; 60 ; 70) d'épaisseur constante, sur laquelle est sertie la paroi (10) de l'enveloppe, et une portion centrale sensiblement discoïde (51 ; 61 ; 71), d'épaisseur nettement plus faible.

4. Générateur selon la revendication 3, **caractérisé par le fait que** ladite portion centrale (51 ; 61 ; 71), d'épaisseur plus faible définit, au sein de la rondelle, un renfoncement (500 ; 600 ; 700) ouvert du côté de la chambre de tranquillisation (40).

5. Générateur selon la revendication 3 ou 4, **caractérisé par le fait que** ladite portion centrale (61) de la rondelle (6) possède également une épaisseur constante.

6. Générateur selon la revendication 3 ou 4, **caractérisé par le fait que** ladite portion centrale (51) de la rondelle (5) se raccorde à la portion annulaire extérieure (50) plus épaisse par une zone périphérique mince et frangible, formant une ligne de rupture circonférentielle.

7. Générateur selon la revendication 3 ou 4, **caractérisé par le fait que** ladite portion centrale (71) de la rondelle (7) se raccorde à la portion annulaire extérieure (70) plus épaisse par une zone périphérique plus épaisse que sa zone centrale, l'épaisseur de cette portion centrale (71) diminuant progressivement de la périphérie vers le centre.

8. Générateur selon l'une des revendications 1 à 7, **caractérisé par le fait que** ladite cloison (5 ; 6 ; 7) est traversée par un orifice central unique.

9. Générateur selon l'une des revendications 1 à 7, **caractérisé par le fait que** ladite cloison (5' ; 6') est traversée par plus d'un orifice (55a, 55b ; 65a, 65b).

10. Générateur pyrotechnique de gaz destiné à la sécurité automobile, comprenant une enveloppe tubulaire (1) fermée à chacune de ses extrémités par une bague de fermeture (11, 12) et subdivisée intérieurement par une cloison qui délimite au moins deux chambres contiguës, à savoir, d'une part, au moins une chambre de combustion (30) contenant une charge pyrotechnique (3) qui est associée à un allumeur (2), ce dernier étant fixé en partie centrale de l'une (11) des bagues de fermeture et, d'autre part, au moins une chambre de tranquillisation (40) dans laquelle est emmanché un condenseur cylindrique poreux (4), qui communique, via la paroi de ce condenseur (4), avec au moins une ouverture de décharge (9) ménagée radialement dans la paroi cylindrique (10) de la chambre de tranquillisation (40), cette cloison étant traversée par au moins un orifice formant tuyère qui autorise un passage contrôlé des gaz chauds générés par la combustion de ladite charge pyrotechnique (3) de la chambre de combustion (30) vers l'espace intérieur du condenseur (4) situé dans la chambre de tranquillisation (40), ces gaz pouvant ensuite s'échapper de la chambre de tranquillisation (40), via la paroi de ce condenseur (4) et à travers ladite ouverture de décharge (9), notamment pour gonfler un coussin de protection gonflable, **caractérisé par le fait que** ladite cloison consiste en une rondelle (5 ; 6 ; 7) possédant une portion annulaire extérieure (50 ; 60 ; 70) d'épaisseur constante et à résistance mécanique élevée, et une portion centrale sensiblement discoïde (51 ; 61 ; 71), d'épaisseur nettement plus faible et de moindre résistance mécanique, recevant l'orifice formant tuyère (55 ; 65 ; 75), la fixation de cette rondelle (5 ; 6 ; 7) à l'intérieur de l'enveloppe tubulaire étant réalisée par sertissage de la paroi cylindrique (10) de l'enveloppe dans une gorge annulaire périphérique (56 ; 66 ; 76) ménagée dans la paroi externe de ladite portion annulaire extérieure (50 ; 60 ; 70), et que ladite portion centrale (51 ; 61 ; 71) est susceptible de se déformer, voire de se rompre, sous l'effet d'une surpression excessive apparaissant à l'intérieur de la chambre de combustion (30), de telle façon que la section de passage des gaz chauds à travers la cloison (5 ; 6 ; 7), de la chambre de combustion (30) vers la chambre de tranquillisation (40), se trouve alors notablement accrue, tandis que les zones déformées (61B) et/ou rompues (540 ; 610) de cette portion centrale (51 ; 61 ; 71) sont refoulées dans la chambre de tranquillisation (40), à l'intérieur dudit condenseur cylindrique (4).
